# EUROPÄISCHE PATENTANMELDUNG

(11) **EP 4 837 418 A1**
(43) Veröffentlichungstag der Anmeldung: **11.11.2026**
(21) Anmeldenummer: 26176741.2
(22) Anmeldetag: 05.05.2026
(51) Int. Cl.: A01M 25/00, A01M 1/20

(54) **VORRICHTUNG ZUM AUSBRINGEN VON KÖDERN**

(30) Priorität: 06.05.2025 DE 202025102494 U
(71) Anmelder: Mallia, Adrian, Attard ATD 9056 (MT)
(72) Erfinder: Mallia, Adrian, Attard ATD 9056 (MT)
(74) Vertreter: LS-MP von Puttkamer Berngruber Loth Spuhler

(57) **Zusammenfassung**

Vorrichtung zum Ausbringen von Ködern. Die Vorrichtung enthält ein giftiges Material zur Abtötung von Schädlingen im Bereich eines Straßenmöbels (1). Die Vorrichtung umfasst einen Behälter (3) zur Aufnahme des Köders. Die Vorrichtung hat einen Adapter (2), der den Behälter (3) mit dem Stadtmöbel (1) verbindet.

## Beschreibung

### Beschreibung

Die Erfindung bezieht sich auf eine Vorrichtung zum Ausbringen von Ködern, die giftige Stoffe zum Abtöten von Schädlingen im Bereich von Stadtmöbeln enthalten, gemäß Anspruch 1.

### Stand der Technik

Bekannte Köderspender sind leicht als Giftköderspender zu erkennen. Das Erscheinungsbild solcher Köderspender zur Ausbringung von Ködern zur Beseitigung von Schädlingen und/oder Ungeziefer wirkt abschreckend auf Besucher von Gärten oder Parks.

### Gegenstand der Erfindung

Aufgabe der Erfindung ist es, eine Vorrichtung zur Aufnahme und Abgabe von Giftstoffen bereitzustellen.

Ein weiterer Gegenstand der Erfindung ist es, die Vorrichtung in die Form eines Stadtmöbels zu integrieren.

### Lösung

Vorrichtung zum Ausbringen eines Köders, der giftiges Material zum Abtöten von Schädlingen im Bereich eines Stadtmöbels enthält.

Die Vorrichtung umfasst einen Behälter zur Aufnahme des Ködermaterials.

Die Vorrichtung verfügt über einen Adapter, der den Behälter mit dem Stadtmöbel verbindet.

### Vorrichtung und Behälter

Die Vorrichtung kann in verschiedenen Formen und Ausprägungen gestaltet werden.

Die Vorrichtung umfasst mindestens einen Behälter zur Aufnahme des Köders (Giftstoff).

Der Behälter hat mindestens zwei Öffnungen.

Mindestens zwei Öffnungen unterscheiden sich in Größe und/oder Durchmesser. Die Öffnungen unterscheiden sich in der Größe und/oder im Durchmesser, so dass Schädlinge unterschiedlicher Größe einen entsprechenden Köder erreichen können. Die Öffnung mit dem kleineren Durchmesser verhindert, dass ein größeres Tier durch die kleinere Öffnung eindringt und einen ungeeigneten Köder erreicht.

Der Behälter ist mit einer Öffnung versehen, die gerade groß genug ist, damit der anvisierte Schädling in den Behälter eindringen und das Material erreichen kann, während größere Tiere davor geschützt sind, es zu erreichen.

Da die Vorrichtung, die mindestens einen Behälter umfasst, in ein Stadtmöbel integriert ist, kann sie nicht als Spender von Giftstoffen (Ködern) identifiziert werden.

### Schädling

Ein Schädling ist ein beliebiger Organismus.

Der Schädling kann sowohl innerhalb als auch außerhalb des Hauses vorkommen.

Im Allgemeinen wird der Begriff Schädling verwendet, um Organismen zu beschreiben, die Lebensmittel und/oder Kulturpflanzen und/oder Viehbestand und/oder Forstwirtschaft schädigen.

Beispiele für Schädlinge sind Ratten, Mäuse, Nacktschnecken, Schnecken, Ameisen und Kakerlaken. Natürlich können auch andere Tiere als Schädlinge bezeichnet werden.

### Köder

Der Köder besteht aus giftigem Material.

Das giftige Material wird ausgebracht, um jede Art von Schädling zu töten. Es versteht sich von selbst, dass auch andere lebende Schädlinge und Ungeziefer bekämpft werden können.

Der Köder kann sowohl einen Lockstoff für den Zielschädling als auch ein entsprechendes Gift enthalten.

### Stadtmöbel

Bei Stadtmöbeln handelt es sich um Gegenstände und Ausrüstungsgegenstände, die in einem Garten und/oder entlang von Straßen und Wegen aufgestellt werden.

Die Stadtmöbel können verschiedenen Zwecken dienen. Bei den Stadtmöbeln kann es sich zum Beispiel um eine Bank und/oder einen Blumentopf handeln. Stadtmöbel können auch eine Lampe oder ein Abfallbehälter sein. Natürlich kann es sich bei den Stadtmöbeln auch um andere Geräte handeln.

Natürlich können die Stadtmöbel in einem privaten Garten und/oder in einem öffentlichen Bereich aufgestellt werden.

### Ausführungsformen der Erfindung

Der Behälter und/oder der Adapter ist an das Stadtmöbel angepasst.

Der Behälter umfasst mindestens eine Öffnung zur Aufnahme von Schädlingen.

Der Behälter umfasst mindestens eine Öffnung zur Aufnahme eines Halters für den Köder.

Der Halter für den Köder ist relativ zum Behälter der Vorrichtung beweglich.

Der Halter weist Merkmale und/oder eine Wabenstruktur zum Tragen des Köders auf.

Der Behälter weist eine Verstärkungsstruktur auf, um das Gewicht der Stadtmöbel zu tragen.

Der Behälter hat mindestens ein Abflussloch und/oder eine Abflussrinne, um auslaufende Flüssigkeiten vom Köder wegzuleiten.

### Vorteile der Erfindung

Um das offensichtliche Aussehen und/oder die Anmutung eines Giftspenders zu vermeiden, ist die Vorrichtung, die den Behälter für den Köder hält, in die Designgeometrie des Stadtmöbels integriert.

Die Vorrichtung ermöglicht es, den Giftspender an öffentlichen und sichtbaren Orten zu platzieren, ohne dass er das Aussehen und die Wahrnehmung herkömmlicher Giftspender hat.

### Zeichnungen

Weitere Beispiele und vorteilhafte Ausführungsformen der Erfindung werden im Folgenden unter Bezugnahme auf die Figuren näher beschrieben. Die Zeichnungen zeigen:
Fig. 1 ein Teil eines Stadtmöbels, das einen Adapter zum Anschluss an einen Köderhalter aufweist,
Fig. 2 eine perspektivische Ansicht eines Teils des Stadtmöbels,
Fig. 3 eine perspektivische Ansicht eines Adapters,
Fig. 4 eine perspektivische Ansicht des Behälters,
Fig. 5 eine perspektivische Ansicht eines Köderhalters der Vorrichtung, die den Köder trägt,
Fig. 6 einen Köderhalter mit einem Rückstellclip,
Fig. 7 eine Draufsicht auf den Behälter der Vorrichtung,
Fig. 8 eine Seitenansicht des Behälters der Vorrichtung, und
Fig. 9 in der Draufsicht einen Einblick in das Innere der Vorrichtung.

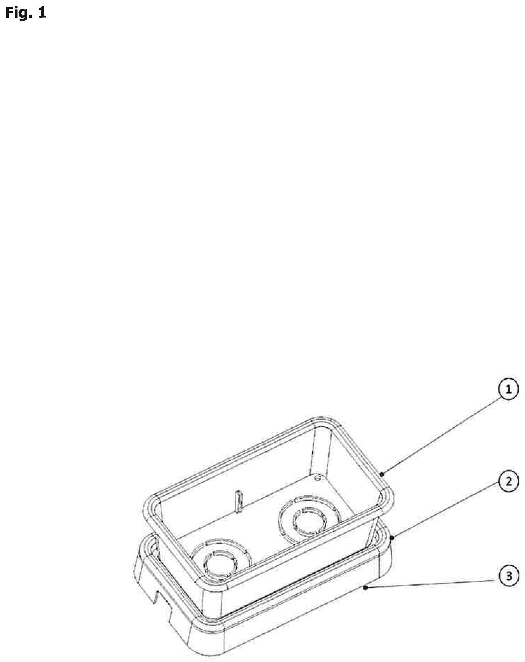

Im Fall von Fig. 1 handelt es sich bei dem Stadtmöbel 1 um einen Topf.

Getrennt durch den Adapter 2 wird das Stadtmöbel 1 auf dem Behälter 3 positioniert.

Ziel des Adapters 2 ist es, den Köder vor den Blicken der Menschen zu verbergen.

Der Adapter 2 verbindet das Stadtmöbel 1 mit dem Container 3 (Abb. 1).

Der Adapter 2 passt sich an unterschiedliche Formen und Geometrien der Stadtmöbel 1 an. Der Adapter 2 passt sich an unterschiedliche Formen und Geometrien des Behälters 3 an.

Der Adapter 2 hält den Behälter 3 in seiner Position und dient als Bodenköderzuführung.

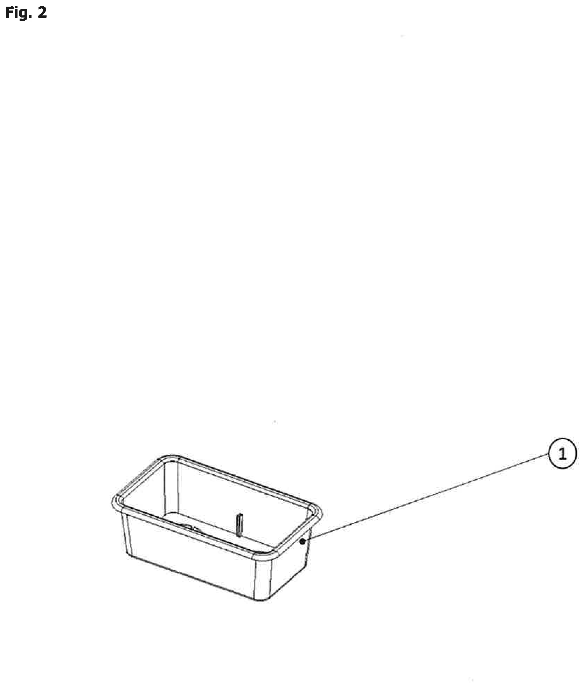

Fig. 2 zeigt eine perspektivische Ansicht des Stadtmöbels 1. In Fig. 2 handelt es sich bei dem Stadtmöbel 1 um einen Topf. Der Topf hat eine umlaufende Seitenwand, die nach unten hin durch einen Boden abgeschlossen ist.

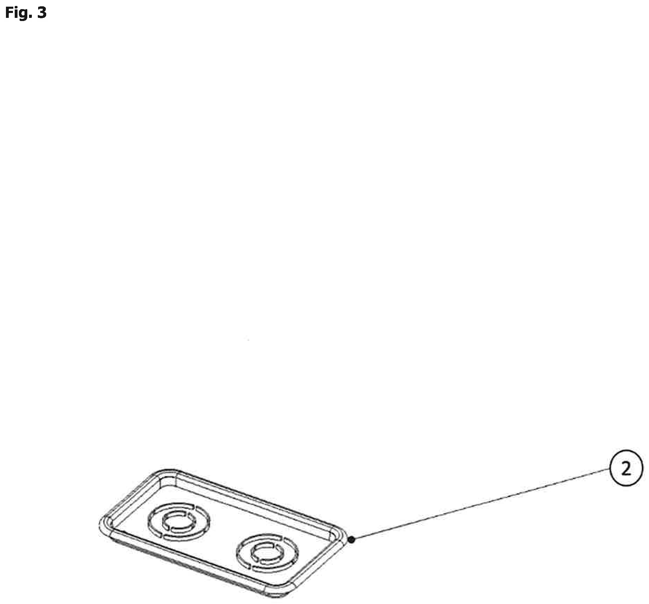

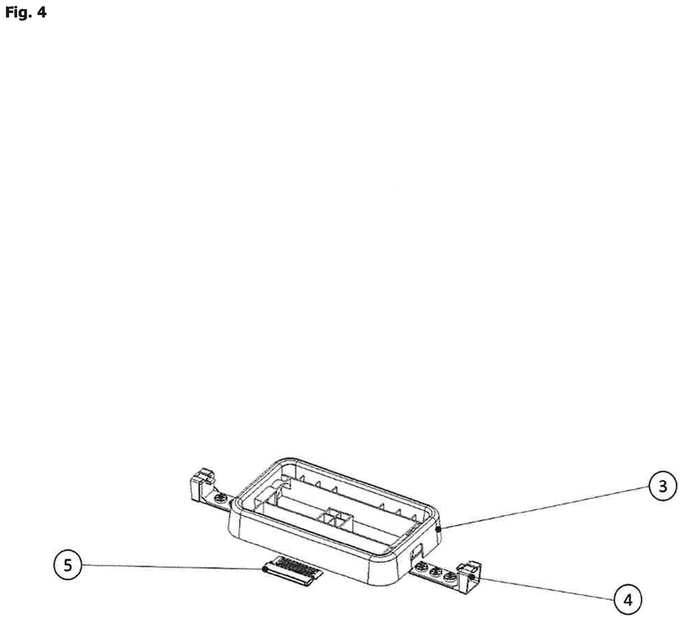

Abb. 3 zeigt die perspektivische Ansicht des Adapters 2. Im montierten Zustand verbindet der Adapter 2 (Abb. 3) das Stadtmöbel 1 (Abb. 2) mit dem Behälter 3 (Abb. 4).

Der Behälter 3 mit dem Köder (Abb. 4) wird unter dem Stadtmöbel 1 (Abb. 1) gestapelt und/oder fest angebracht.

Jeder Behälter 3 mit Köder ist mit mindestens einem abnehmbaren Köderhalter 4 für größere Schädlinge und/oder mindestens einem abnehmbaren Köderhalter 5 für kleinere Schädlinge ausgestattet.

In den Fig. 4 bis 8 sind die Köderhalter 4 und 5 in Bezug auf den Behälter 3 seitlich beweglich dargestellt. Zum Entfernen der Köderhalter 4 und 5 ist eine selbsthaltende und/oder rückstellende Klammer 10 angeordnet.

Sowohl der Köderhalter 4 als auch der Köderhalter 5 können herausgezogen werden (Fig. 4).

In Fig. 4 ist mindestens eine zweite Art von Köderhalter 5 dargestellt. Der Köderhalter 5 dient dazu, kleinere Schädlinge abzutöten.

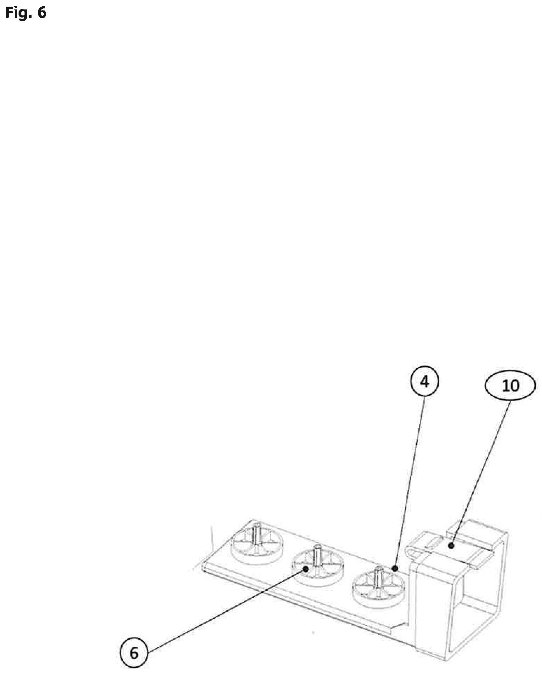

Der Köderhalter 4 (Abb. 6) ist für die Aufnahme von festen und/oder halbfesten Ködern für größere Schädlinge vorgesehen.

In Fig. 6 weist jeder Köderhalter 4 mindestens ein oder mehrere Merkmale 6 auf, wobei der Köder an den Merkmalen 6 befestigt ist.

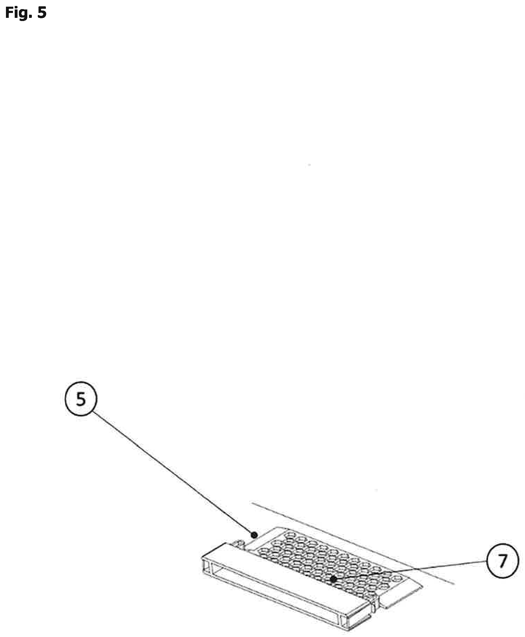

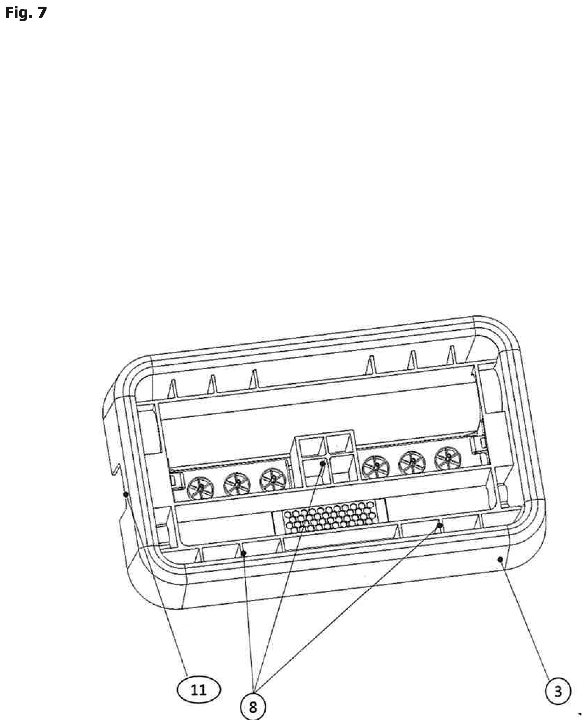

Fig. 5 und Fig. 7 zeigen, dass die Merkmale 6 mindestens eine oder mehrere erhöhte Flächen aufweisen. Auf den erhöhten Flächen ist der Köder vor Wasser und/oder Flüssigkeiten geschützt.

Das giftige Material zum Anlocken kleinerer Schädlinge (zum Beispiel Ameisen, Schaben) kann in Form einer Wabenstruktur 7 (Abb. 5) ausgeführt sein.

Die Wabenstruktur 7 ist so gestaltet, dass sie kleine Mengen eines pastösen Köders durch Kapillarwirkung aufnimmt.

Die Köderhalter 4 und 5 können zur Reinigung und/oder zum Nachfüllen entnommen werden. Jeder Köderhalter 4 und 5 kann einzeln ausgetauscht werden.

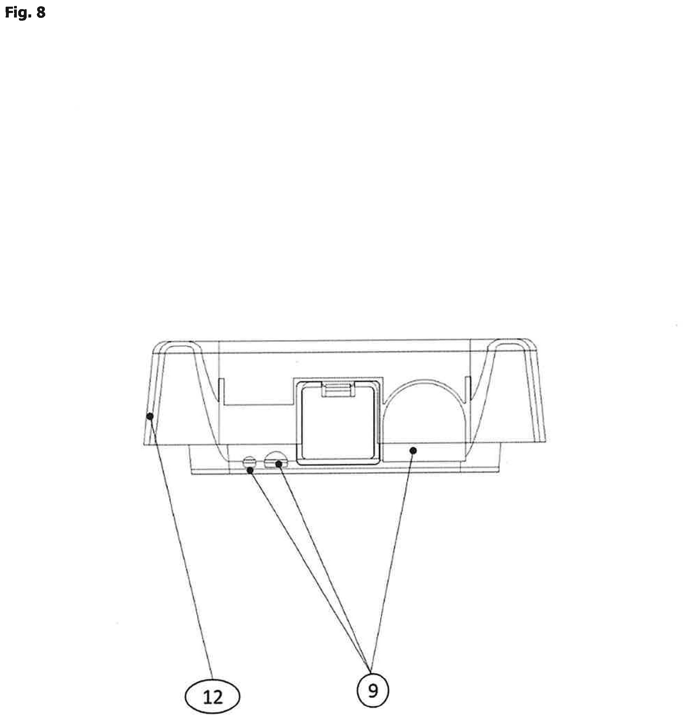

Fig. 8 zeigt einen Köderhalter 4, 5 mit geometrischen Merkmalen 12.

Die geometrischen Merkmale 12 von Fig. 8 verbergen drei Öffnungen 9.

Die Öffnungen 9 sind so gestaltet, dass sie Schädlinge unterschiedlicher Größe aufnehmen können.

Die Öffnungen 9 leiten die Schädlinge zum richtigen Köder. Die Öffnung 11 ermöglicht den Zugang zu den Köderhaltern 4, 5, ohne dass die Schädlingsöffnung für normale Benutzer sichtbar ist.

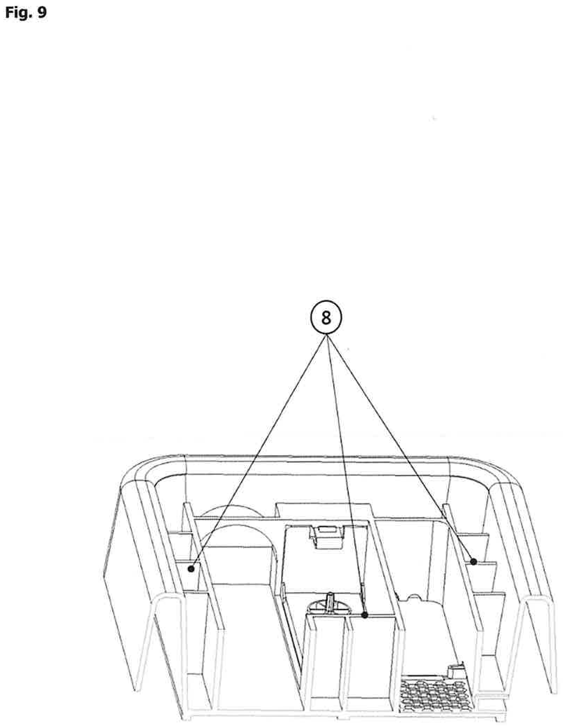

Das Möbelstück 1 aus Fig. 9 kann schwerer sein als der Behälter 3.

Die Vorrichtung mit dem Behälter 3 wird unter einem Möbelstück angebracht.

Der Adapter 2 deckt den Behälter 3 gegen das Eindringen von Flüssigkeit ab. Der Adapter 2 verbindet den Behälter 3 und das Stadtmöbel 1.

Um das Gewicht des Behälters 3 zu tragen, kann am Rand und/oder in der Mitte des Stadtmöbels 1 eine Verstärkungsstruktur 8 angeordnet sein.

Der Rand und/oder die Mitte der Verstärkungsstruktur 8 des Möbels 1 ermöglicht es, die Vorrichtung mit ihrem Behälter 3 unter verschiedene Arten von Stadtmöbeln 1 zu stellen.

Um unter jeden Möbeltyp 1 zu passen, kann auch der Adapter 2 verändert und/oder modifiziert werden.

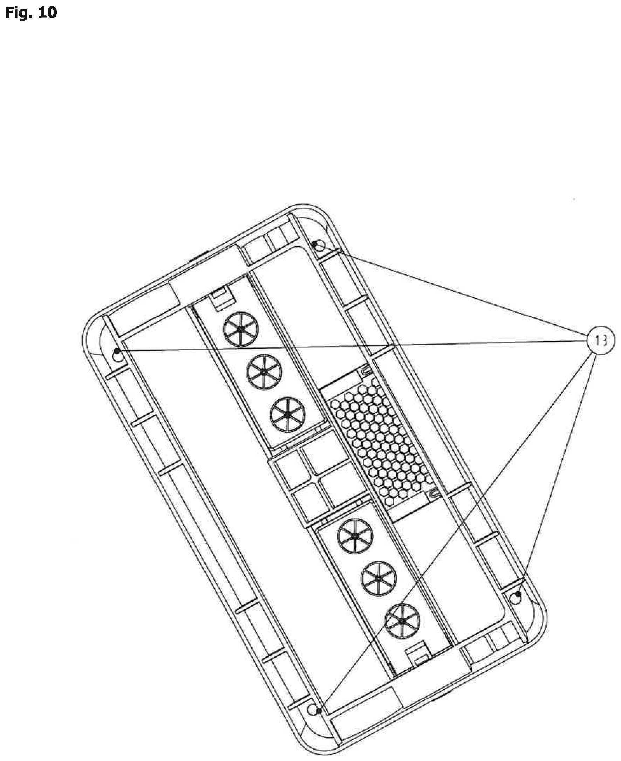

Fig. 10 zeigt eine Draufsicht auf den Behälter (3). Der Behälter (3) hat an jeder Kante ein Abflussloch und/oder eine Abflussrinne (13), durch die auslaufende Flüssigkeiten vom Köder weggeleitet werden.

### Liste der Referenznummern

- 1: Stadtmöbel
- 2: Adapter
- 3: Behälter zur Aufnahme von Ködern (giftiges Material)
- 4: Halterung für größere Schädlinge
- 5: Halterung für kleinere Schädlinge
- 6: Merkmal
- 7: Wabenstruktur
- 8: Verstärkungsstruktur
- 9: Mehrere Öffnungen zur Aufnahme von Schädlingen
- 10: Rückstellclip
- 11: Öffnung zum Köderhalter
- 12: Geometrisches Merkmal
- 13: Abflussloch und/oder Abflussrinne

## Patentansprüche

1. Vorrichtung zum Ausbringen von Ködern, bestehend aus giftigem Material zum Abtöten von Schädlingen im Bereich eines Stadtmöbels (1), wobei die Vorrichtung einen Behälter (3) zur Aufnahme des Köders aufweist,
**dadurch gekennzeichnet, dass**,
die Vorrichtung einen Adapter (2) aufweist, der den Behälter (3) mit dem Stadtmöbel (1) verbindet.

2. Vorrichtung nach Anspruch 1, **dadurch gekennzeichnet, dass** der Behälter (3) und/oder der Adapter (2) an das Stadtmöbel (1) angepasst ist.

3. Vorrichtung nach Anspruch 1, **dadurch gekennzeichnet, dass** der Behälter (3) mindestens eine Öffnung (9) zur Aufnahme von Schädlingen aufweist.

4. Vorrichtung nach Anspruch 1, **dadurch gekennzeichnet, dass** der Behälter (3) mindestens eine Öffnung (11) zur Aufnahme eines Halters (4; 5) für einen Köder aufweist.

5. Vorrichtung nach Anspruch 4, **dadurch gekennzeichnet, dass** der Halter (4; 5) für den Köder relativ zum Behälter (3) der Vorrichtung bewegbar ist.

6. Vorrichtung nach Anspruch 4, **dadurch gekennzeichnet, dass** der Halter (4; 5) Merkmale (6) und/oder eine Wabenstruktur (7) zum Tragen des Köders aufweist.

7. Vorrichtung nach Anspruch 1, **dadurch gekennzeichnet, dass** der Behälter (3) eine Verstärkungsstruktur (8) aufweist, um das Gewicht des Stadtmöbels (1) zu tragen.

8. Vorrichtung nach Anspruch 1, **dadurch gekennzeichnet, dass** der Behälter (3) mindestens ein Abflussloch und/oder einen Abflussrinne (13) aufweist, um auslaufende Flüssigkeiten vom Köder wegzuleiten.
